# EUROPEAN PATENT SPECIFICATION

(11) **EP 2 539 222 B1**
(45) Date of publication and mention of the grant of the patent: **23.08.2017**
(21) Application number: 11704073.3
(22) Date of filing: 21.02.2011
(51) Int. Cl.: B63B 25/16, B63B 35/44, F17C 3/02

(54) **HYDROCARBON PROCESSING VESSEL AND METHOD**
WASSERFAHRZEUG ZUR KOHLENWASSERSTOFFVERARBEITUNG UND VERFAHREN
NAVIRE DE TRAITEMENT D'HYDROCARBURES ET PROCÉDÉ

(30) Priority: 22.02.2010 EP 10154236
(43) Date of publication of application: 02.01.2013
(60) Divisional application: 17178037.2
(73) Proprietor: Shell Internationale Research Maatschappij B.V., 2596 HR The Hague (NL)
(72) Inventor: LISTER, John David, London Greater London SE1 7NA (GB); STEPHENS, Andrew Neil, London Greater London WC2R 0ZA (GB)
(74) Representative: Matthezing, Robert Maarten
(86) International application number: PCT/EP2011/052484
(87) International publication number: WO 2011/101461

(56) References cited:
- EP-A1- 2 157 013
- WO-A1-03/051711
- WO-A1-2009/072681
- GB-A- 1 317 403
- KR-B1- 100 918 199
- US-A- 2 986 011
- US-A- 3 039 418
- "JAPANESE INNOVATION SECURES OWNER'S APPROVAL", MOTORSHIP, NEXUS MEDIA COMMUNICATIONS, SWANLEY, KENT, GB, vol. 71, no. 840, 1 July 1990 (1990-07-01) , pages 52,54-55, XP000134278, ISSN: 0027-2000

## Description

The present invention relates to a vessel for the processing of a hydrocarbon stream and to a method for using said vessel.

The vessel of the invention is for instance a floating liquefied natural gas carrier (LNGC), a floating liquefied petroleum gas carrier (LPGC), a floating liquefied natural gas production, storage and offloading structure (FPSO), a floating liquefied petroleum gas production, storage and offloading structure, a floating natural gas treatment, liquefaction, storage and offloading (FLNG) structure, or an offshore hydrocarbon processing structure in general.

LNG is usually primarily liquefied methane, possibly comprising varying quantities of ethane, propane and butanes with trace quantities of pentanes and heavier hydrocarbon components. Usually the LNG is low in aromatic hydrocarbons and non-hydrocarbons such as H₂O, N₂, CO₂, H₂S and other sulfur compounds, because these compounds have been removed at least partially before liquefying the natural gas stream. The liquefied natural gas is then stored and transported in liquid form.

It is desirable to liquefy natural gas for a number of reasons. As an example, natural gas can be stored and transported over long distances more readily as a liquid than in gaseous form, because it occupies a smaller volume. It may not need to be stored at high pressures. Liquefied natural gas can be stored at atmospheric pressure if maintained at cryogenic temperatures, such as at -160 °C or below. Alternatively, liquefied natural gas may be stored at temperatures above -160 °C if it is pressurized above atmospheric pressure.

LNG carriers and oil tankers, for instance, have tanks which will either be empty or full and, therefore, large tanks which span the beam of the tankers may be efficiently used. On the other hand, offshore hydrocarbon processing structures, such as floating Liquefied Natural Gas (FLNG) and oil or condensate production, storage and offloading (FPSO) vessels, are configured to have tanks which are filled and emptied slowly by comparison and which are, therefore, partially filled under typical processing and operating conditions. In operation, an FLNG or an FPSO vessel, for instance, will have partially filled tanks at most times. As the vessel moves in response to movements in the body of water in which it is located, a partially filled tank will be subject to movement which, in turn, translates into turbulence or so-called "sloshing" of the product within the tanks. This sloshing is an undesirable feature of a partially filled hydrocarbon processing vessel because sloshing may for instance damage certain types of storage tanks, which may restrict the design of the vessel or may lead to costly downtime.

Patent specification GB1317403, KR100918199B, US Pat. 3039418, and an article "Japanse innovation secures owner's approval" pubished in The Motor Ship 17(1990) No.840 pp.52-55 disclose LNG carriers provided with storage tanks on either side of a central longitdinal bulkhead.

Storage tanks for liquefied natural gas typically fall into one of the following categories: SPB, Kvaerner-Moss, and membrane tanks.

The SPB tank (Self-supporting Prismatic Type "B") is a free-standing tank system. The SPB design has flat walls which are internally stiffened by webs and girders to reduce the stresses and deflections to acceptable limits under service conditions. The tanks are fitted internally with a longitudinal bulkhead and a transverse swash bulkhead to reduce the effects of cargo free surface and liquid surge motions respectively.

Although the SPB tanks can withstand sloshing, the internal reinforcing structures render these tanks relatively expensive.

The Kvaerner-Moss tank is a spherical tank system. The sphere contains no internal structural members or bulkheads, and usually can withstand sloshing of the cryogenic contents thereof.

However, due to the spherical shape, no deck space is available for piping and the tanks use the available space in the vessel relatively inefficiently.

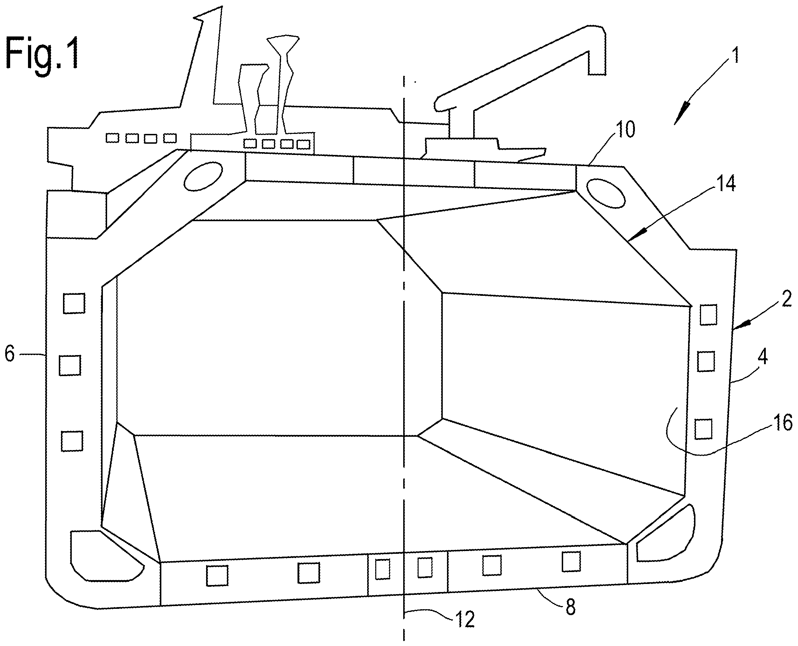

Figure 1 shows a typical vessel 1 for the processing or transport of LNG having membrane storage tanks. The vessel comprises an elongate hull 2 comprising longitudinal sides 4, 6, a base 8 extending between the sides, a deck 10 being located atop the hull and between the sides, and a longitudinal mid-plane 12 in between the longitudinal sides. A membrane tank 14 spans the beam of the vessel. The inner surface 16 of the tank 14 comprises a liquid barrier which is referred to as the membrane and which can be in direct contact with the cryogenic load. The outer surface of the membrane is typically covered with insulation panels. The membrane tank may also have two substantially identical membranes and insulation systems, one within the other, to form a composite two barrier system.

Membrane tanks provide the cheapest containment system, use the available space within the hull most efficiently and enable a flat deck space which is available for, for instance, piping and processing units. The membrane tanks may however be damaged by sloshing of the cargo, especially when the tanks are only partially filled.

US-2009/0218354-A1 discloses a floating marine structure including membrane storage tanks. Each storage tank includes an internal longitudinal bulkhead which is provided with one or more fluid passages near the bottom part thereof to create fluid communication between first and second compartments on either side of the bulkhead. US-2009/0218354-A1 rejects the use of a fluid tight bulkhead, as the division of the storage tanks in two independent spaces would require separately installed pipe lines and equipment, such as pumps and pump towers for discharging LNG. Also, according to US-2009/0218354-A1 the manufacturing costs would increase and the operation and management of the LNG storage tanks is complicated.

WO-2009/072681-A1 discloses anti-sloshing LNG cargo tanks, the tanks having an internal longitudinal corrugated anti-sloshing bulkhead which is provided with holes to create fluid passages.

US-2010/0018453-A1 discloses a longitudinal floating vessel including a fluid storage area, which is divided into two longitudinal membrane storage tanks by a longitudinal centerline cofferdam. The vessel may be 326 meters in length and have a width in the range of 30 meters to 57.5 meters. Each of the two storage tanks may be about 212 meters in length, about 14.5 meters in width, and have a height of 32.5 meters. The width of the two storage tanks is half the width of a typical LNG storage tank. Due to the elongated storage tanks, this design requires costly and spacious reinforcement structures to prevent torsion of the vessel along its longitudinal axis during heavy seas.

The article "Mobil's Floating LNG Plant", Proceedings of the Eighth (1998) International Offshore and Polar Engineering Conference, by Marie Naklie et al., discloses a floating LNG plant comprising a square concrete barge with a central moonpool surrounded by prismatic LNG storage tanks, water ballast tanks, processing units, living quarters and turbines respectively. The prismatic storage tanks are located in the square hull around the central moon pool, the tanks being surrounded by bulkheads. Each tank is surrounded by concrete coated with polyurethane foam such that there is no penetration through the LNG tank with the exception of a pump shaft at the top. The floating LNG plant has a main deck at the top of the square hull. The main deck is exposed to heavy seas and has no equipment thereon. The article rejects traditional approaches including a ship-shaped weathervaning vessel. Instead, the design relies on the use of concrete and the square shaped barge for stability during rough seas, low maintenance requirements, fatigue life and high mass moment of inertia.

Given the disadvantages of the prior art described above, the present invention aims to provide a more efficient and cost effective floating hydrocarbon processing structure.

The invention therefore provides a hydrocarbon processing vessel having maximum width of 70 meters or more, the vessel comprising:
- an elongate hull comprising longitudinal sides, a base extending between the sides, a deck being located atop the hull and between the sides, and a longitudinal mid-plane in between the longitudinal sides;
- a plurality of first storage tanks arranged on the starboard side of the longitudinal mid-plane;
- a plurality of second storage tanks arranged on the port side of the longitudinal mid-plane in symmetrical side-by-side arrangement with the plurality of first storage tanks; and
- at least one longitudinal bulkhead extending along the mid-plane and located between adjacent first and second storage tanks, wherein the at least one bulkhead comprises a first longitudinal bulkhead and a second longitudinal bulkhead spaced apart from and parallel to the first longitudinal bulkhead, and wherein a container or a duct to contain ballasting water is arranged within a space between the first and second bulkhead near the base of the vessel.

The ballasting water is used for ballasting the vessel, for instance using (sea)water. The vessel may be ballasted to provide stability when required.

In embodiments of the invention, the tanks may be membrane storage tanks. The tanks may be substantially square in plan view. The at least one bulkhead may extend from the base of the hull to the deck, which deck is perpendicular to and is supported by said at least one bulkhead. The first longitudinal bulkhead and second longitudinal bulkhead may define a passageway therebetween which is sufficient to enable access for inspection.

At least one transverse bulkhead may be arranged between subsequent storage tanks of the plurality of first storage tanks and the plurality of second storage tanks. Herein, the at least one transverse bulkhead may comprise a first transverse bulkhead and a second transverse bulkhead spaced apart from and parallel to the first transverse bulkhead. The transverse bulkhead may extend from the base of the hull to the deck, which deck is perpendicular to and is supported by said at least one transverse bulkhead.

The structure of the vessel having twinned pairs of storage tanks separated by a longitudinal bulkhead provides a vessel that uses available space efficiently and enables the use of cost effective membrane storage tanks, while the longitudinal bulkhead provides structural support to the deck and the vessel.

The one or more longitudinal bulkheads are given sufficient strength and stiffness to provide structural support to the deck and to any facilities mounted thereon.

The space between the longitudinal bulkheads may be sufficient to enable access for inspection and can be used to accommodate service pipework. The pipework may include pipes for circulating warm fluid, such as (sea)water discharged from the process units, to counteract a cooling effect of the cryogenic cargo in the tanks on the structure of the vessel. This has the added benefit of cooling the process water to a temperature closer to the temperature of the local environment.

Herein, the pipework preferably includes pipes for taking in (sea)water from the local environment to cool one or more of the process units. The pipework may include discharge pipes to discharge the fluid to the environment after circulation and cooling thereof.

According to another aspect, the invention provides a method for the liquefaction of a gaseous hydrocarbon stream to at least provide liquefied natural gas (LNG), using the vessel as disclosed above.

Further advantages and details of the present invention will become apparent with the benefit of the following detailed description of embodiments and upon reference to the accompanying drawings, in which:
Figure 1 shows a vessel of the prior art in cut-away perspective view, the vessel comprising a membrane storage tank;
Figure 2 shows a transverse cross-sectional view of a vessel according to an embodiment of the invention;
Figure 3 shows a transverse cross-sectional view of a vessel according to yet another embodiment of the invention;
Figure 4 shows a schematic plan view of a vessel according to an embodiment of the invention;
Figure 5 shows a plan view of another embodiment of a vessel according to the invention;
Figure 6 shows a cross-sectional side view of an embodiment of a vessel according to the invention;
Figure 7 shows a perspective view of an embodiment of a vessel according to the present invention; and
Figure 8 shows a schematic transverse cross-sectional view of three exemplary vessels.

While the invention is susceptible to various modifications and alternative forms, specific embodiments thereof are shown by way of example in the drawings and will herein be described in detail. It should be understood that the drawings and detailed description thereto are not intended to limit the invention to the particular form disclosed, but on the contrary, the intention is to cover all modifications, equivalents and alternatives falling within the scope of the invention as defined by the appended claims.

Further, although the invention will be described in terms of specific embodiments, it will be understood that various elements of the specific embodiments of the invention will be applicable to all embodiments disclosed herein.

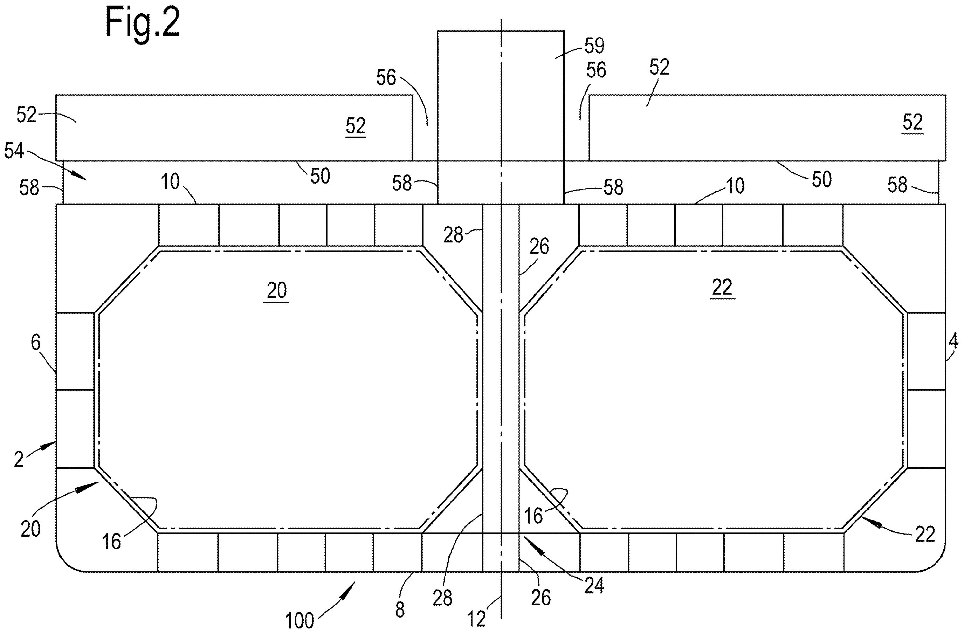

Figure 2 shows an embodiment of a vessel 100 according to the present invention. The vessel comprises an elongate hull 2 comprising longitudinal sides 4, 6, a base 8 extending between the sides, a deck 10 being located atop the hull and between the sides, and a longitudinal mid-plane 12 in between the longitudinal sides. A plurality of first storage tanks 20 is arranged on the starboard side of the longitudinal mid-plane. A plurality of second storage tanks 22 arranged on the port side of the longitudinal mid-plane in symmetrical side-by-side arrangement with the plurality of first storage tanks. Preferably, the first and second storage tanks are membrane tanks, wherein the inner surface is provided with a membrane 16.

Pipes (not shown) for the circulation of warm fluid may be arranged between the first and the second longitudinal bulkhead 26, 28 to counteract the cooling effect of the cargo in the plurality of first and second storage tanks. The space between the first and second bulkhead may also be used for ballasting, for instance using seawater. A container or a duct to contain the ballasting water is arranged within said space near the base 8 of the vessel. At least one longitudinal bulkhead 24 extends along the mid-plane and is located between adjacent first and second storage tanks. According to the invention shown in Figure 2, the at least one longitudinal bulkhead comprises a first longitudinal bulkhead 26 and a second longitudinal bulkhead 28 which is spaced apart from and extends parallel to the first longitudinal bulkhead 26. A passageway 30 extends therebetween and is sufficient to enable access for inspection by crew. The first and second bulkheads 26, 28 extend from the base 8 of the hull 2 to the deck 10, such that the deck is supported by said bulkheads. At the top side thereof, the first and second longitudinal bulkheads 26, 28 are connected to the deck, for instance by welding and/or riveting.

The vessel may comprise at least one processing deck 50, which is elevated with respect to the deck 10. The processing deck has processing units 52 for the processing of a hydrocarbon stream located thereon. A pipe arrangement (not shown) for transportation of process fluids may be located on or under the processing deck.

Preferably, a space 54 between the processing deck and the main deck 10 is sufficient to provide a passageway for crew. One or more corridors 56 may be arranged in between bordering process units. Each corridor may have a width that is sufficient to provide a passageway for crew.

A support structure 58 connects the process deck 50 to the deck 10. The support structure 58 includes for instance separate supports or a frame that extends over a length of the vessel.

In the embodiment shown in Figure 2, support structures 58 are provided substantially above and extending along the sides 4, 6. Additional support structures 58 are provided substantially at or near the mid-plane 12.

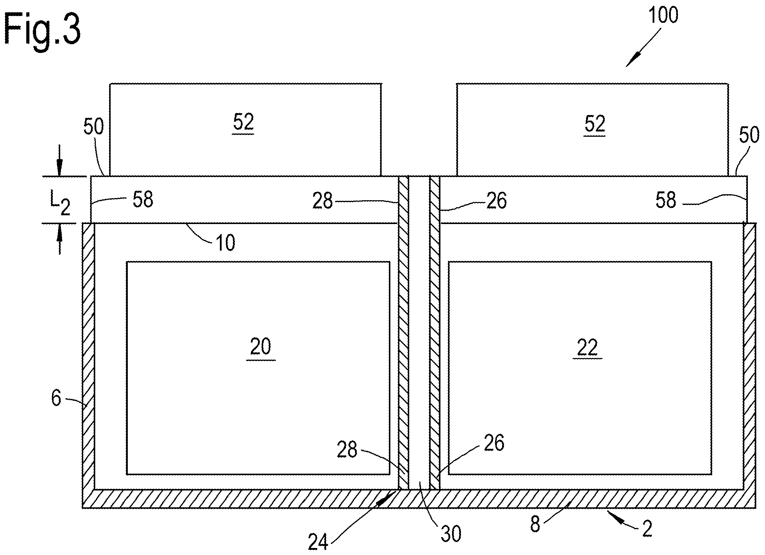

In the embodiment shown in Figure 3, the first and second longitudinal bulkheads 26, 28 extend from the base 8 to the process deck, obviating the support structures at the mid-plane of the vessel. The longitudinal bulkheads are (directly) connected to the deck 10 and/or to the base 8 to provide structural reinforcement to the deck and to the vessel.

In both the embodiments of Figures 2 and 3, the longitudinal bulkheads 26, 28 support the deck 10 on the mid-plane sides of the respective processing units 52, and the sides 4, 6 support the deck on the outer sides of the processing units. The one or more longitudinal bulkheads thus support the deck and provide the deck with sufficient strength to support to weight of the processing units 52 and associated facilities such as piping. The longitudinal bulkheads enable the use of heavier processing equipment on the deck. The piping may for instance be clustered in a piperack 59, or be arranged on or attached to the underside of the process deck 50.

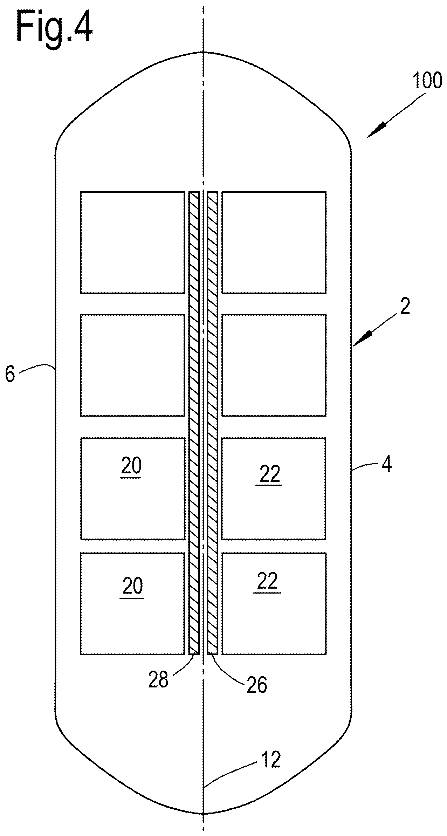

As shown in Figure 4, the first and second storage tanks 20, 22 may be membrane tanks which are substantially square in plan view. The longitudinal bulkheads 26, 28 extend along a substantial part of the length of the vessel, for instance at least along the length of the plurality of storage tanks 20, 22.

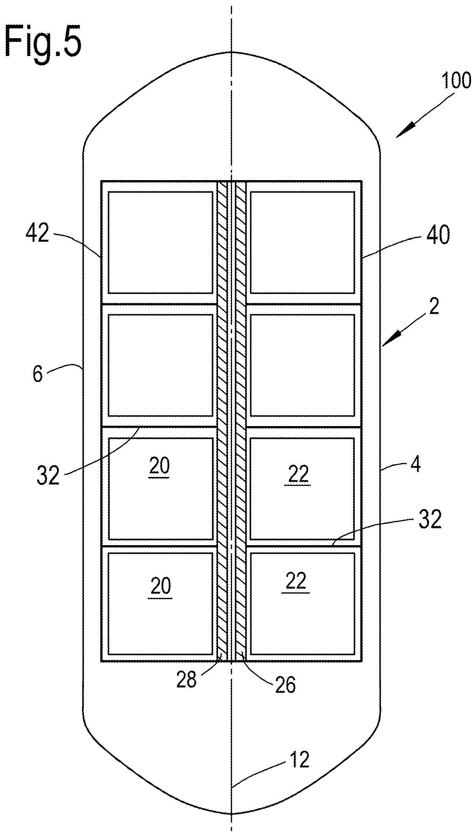

Figure 5 shows a vessel 100, wherein transverse bulkheads 32 are arranged between subsequent storage tanks of the plurality of first storage tanks and of the plurality of second storage tanks. The transverse bulkheads 32 extend perpendicular to the longitudinal bulkheads 26, 28. A space 38 between the first and second transverse bulkheads may be sufficient to provide a passageway for crew and/or to install pipes etc.

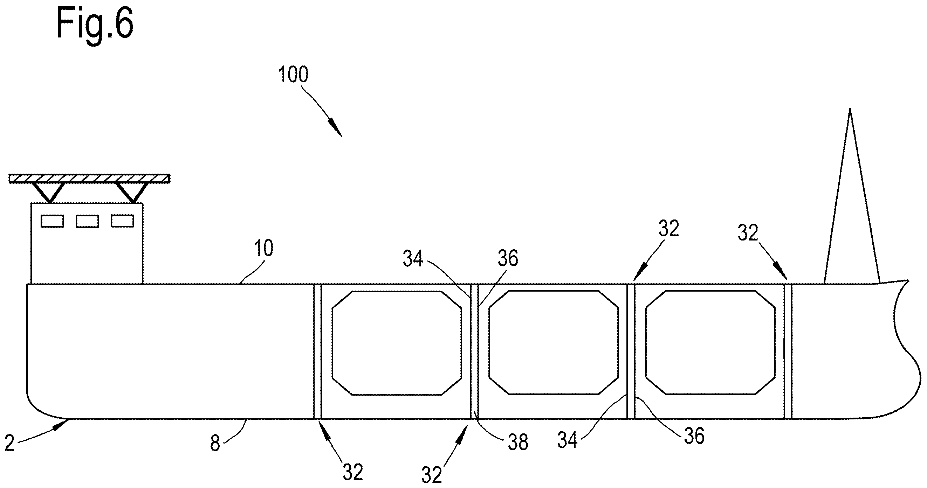

As shown in Figure 6, the at least one transverse bulkhead 32 may comprise a first transverse bulkhead 34 and a second transverse bulkhead 36 spaced apart from and parallel to the first transverse bulkhead. Preferably, the first and second transverse bulkheads 34, 36 extend from the base 8 of the hull 2 to the deck 10, which deck is supported by said transverse bulkheads. The transverse bulkheads are connected to the deck 10 and/or to the base 8 to provide structural reinforcement to the deck and to the vessel.

The vessel may comprise secondary longitudinal bulkheads 40, 42 extending along and parallel to the longitudinal sides 4, 6 respectively. The secondary longitudinal bulkheads 40, 42 may be double bulkheads.

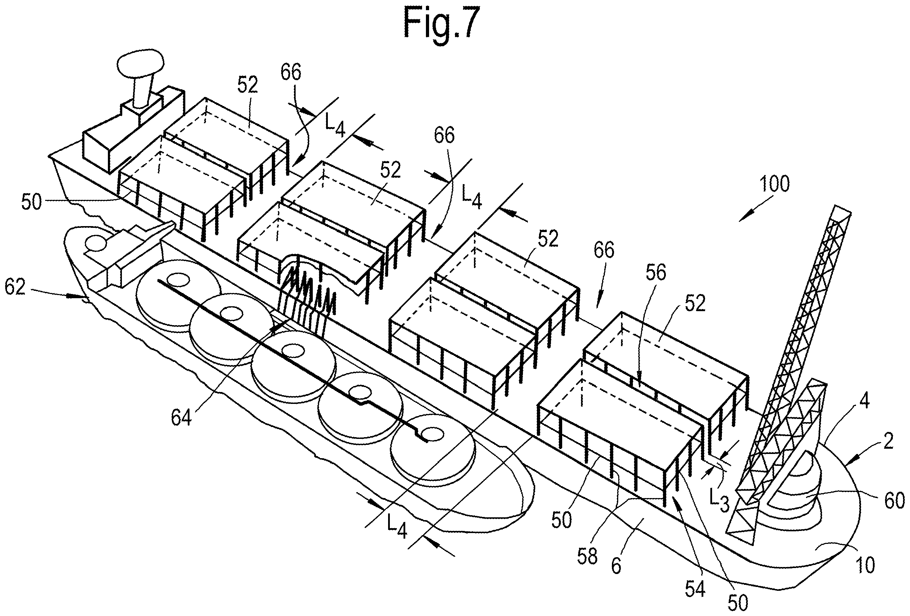

Figure 7 shows vessel 100 for, for instance, the treatment, liquefaction, storage and off-loading of natural gas (FLNG). Near the bow thereof, vessel 100 has a turret 60, which is connected via risers to subsea hydrocarbon reservoirs. The vessel can swivel around the turret, which is anchored to the seabed, enabling the vessel 100 to weathervane. Liquefied natural gas carrier (LNGC) 62 is moored at the mooring side of the vessel 100, in parallel to longitudinal side 6, and is coupled to off-loading structure 64.

As shown in Figure 7, the vessel of the invention may have one or more processing decks 50, which are elevated with respect to the deck 10. Each processing deck 50 has a respective processing unit 52 for the processing of a hydrocarbon stream located thereon. The processing deck 50 may be one deck, substantially spanning the width of the vessel, as previously shown in Figure 2. Alternatively, two or more processing decks may be arranged adjacent to each other, each carrying separate processing units and having a longitudinal corridor 56 and/or a transverse space 66 between bordering processing units or processing decks. The spaces 66 may function as safety gaps to guide a potential blast outboard of the vessel.

The one or more processing decks 50 extend parallel to the deck 10 along a substantial part of the length and width of the vessel. Herein, substantial part may imply 80% or more, for instance about 90% to 95%.

The vessel may comprise a maintenance deck (not shown) located between and extending parallel to the deck 10 and the processing deck 50. The distance between the maintenance deck and the processing deck 50 may be sufficient to provide a passageway for crew.

The distance L2 (Fig. 2) between the processing deck and the deck 10 is preferably more than 1.5m, for instance about 2m or more. The longitudinal corridor 56 between bordering process units 52 has a width L3 that may be sufficient to provide a passageway for people, for instance in the order of 0.5 m or more. One or more maintenance decks may extend along a substantial part of the one or more process decks, and preferably along the entire process deck. The explosion safety gaps 66 may be provided between bordering processing units along the length of the vessel for explosion and fire escalation mitigation. The explosion safety gaps 66 have a minimum width L4 of, for instance, 20 m or more.

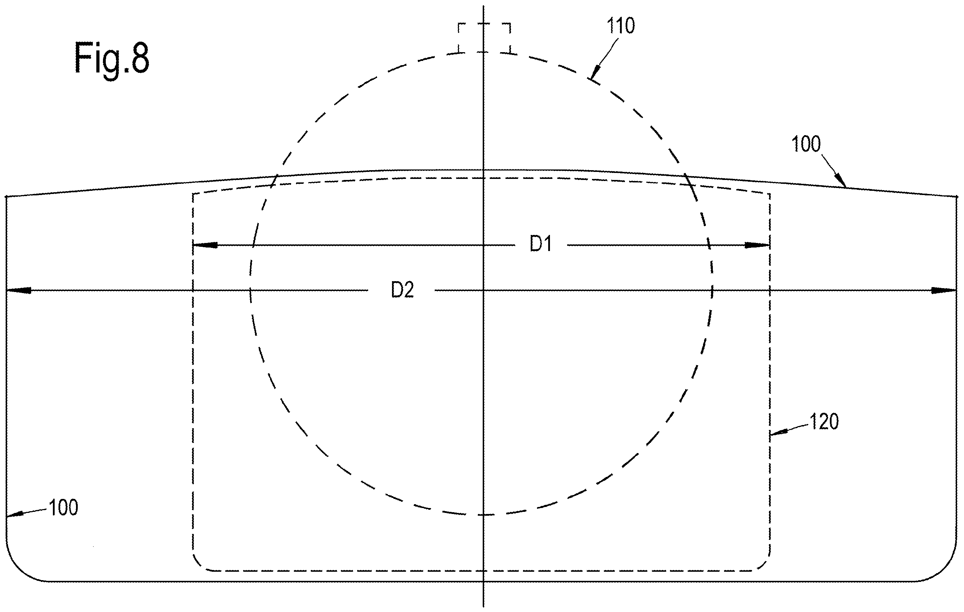

Figure 8 shows an exemplary comparison of the vessel 100 of the present invention with the outline of either a vessel 110 having MOSS type tanks, or a vessel 120 having a single row of membrane storage tanks. Herein, the width D1 of the latter, for instance the maximum width i.e. the beam, is substantially smaller than the width D2 of the vessel of the invention. The vessel 100 is provided with two rows of full size membrane storage tanks, and consequently the breadth of the hull of the vessel 100 is about 1.5 to 2.5 times larger than the width of the exemplary vessels 110, 120.

Herein, full size membrane tanks implies that the storage tanks have a width in the order of about 30 meters or more. The maximum width of the vessel 100 is about 70 meters or more. The vessel 100 for instance accommodates membrane tanks 20, 22 having a width of about 35 to 50 meters. The width of the vessel 100 is for instance in the range of 75 to 120 meters, for instance about 100 meters. The storage tanks have a height in the order of 30 meters or more.

The vessel 100 may be provided with one or more smaller storage tanks (not shown) to function as rundown tanks. Herein, reference is made to co-pending application PCT/EP2009/067052. Thus, liquefied natural gas may be loaded into the rundown tanks until enough LNG is available to fill one of the full size tanks up to a predetermined level, for instance in the range of 80% to 90%, above which sloshing problems will be avoided. The cargo is than transferred to the full size tank to fill said tank at once up to the predetermined level.

The design of the vessel according to the invention includes two rows of twinned full size membrane storage tanks. The tanks enable a flat deck space. The one or more longitudinal bulkheads support the deck, so that relatively heavy equipment and processing units can be arranged on the deck. Optionally, transverse bulkheads strengthen the structure of the vessel and support the deck similar to the longitudinal bulkheads. The vessel of the invention thus uses the available space efficiently, and provides a cost efficient offshore structure for the processing of hydrocarbons such as natural gas.

## Claims

1. A hydrocarbon processing vessel (100), the vessel comprising:
- an elongate hull (2) comprising longitudinal sides (4, 6), a base (8) extending between the sides, a deck (10) being located atop the hull and between the sides, and a longitudinal mid-plane (12) in between the longitudinal sides;
- a plurality of first storage tanks (20) arranged on the starboard side of the longitudinal mid-plane;
- a plurality of second storage tanks (22) arranged on the port side of the longitudinal mid-plane in symmetrical side-by-side arrangement with the plurality of first storage tanks; and
- at least one longitudinal bulkhead (24) extending along the mid-plane and located between adjacent first and second storage tanks, wherein the at least one bulkhead comprises a first longitudinal bulkhead (26) and a second longitudinal bulkhead (28) spaced apart from and parallel to the first longitudinal bulkhead (26),
**characterized in that** a container or a duct to contain ballasting water is arranged within a space between the first and second bulkhead near the base of the vessel, wherein the maximum width of the vessel is 70 meters or more.

2. The vessel of claim 1, wherein pipework for the circulation of warm fluid is arranged between the first longitudinal bulkhead (26) and the second longitudinal bulkhead (28) to counteract the cooling effect of the cargo in the plurality of first and second storage tanks.

3. The vessel of claim 2, wherein the warm fluid includes (sea)water discharged from process units (52).

4. The vessel of claim 2 or 3, wherein the pipework includes pipes for discharging the circulated fluid to the environment.

5. The vessel of claim 2, 3 or 4, wherein the pipework includes pipes for taking in seawater from the environment to cool the process units (52).

6. The vessel of claim 1, wherein the ballasting water is seawater.

7. The vessel of claim 1, wherein the first longitudinal bulkhead (26) and the second longitudinal bulkhead (28) define a passageway (30) therebetween which is sufficient to enable access for inspection.

8. The vessel of claim 1, wherein the at least one bulkhead (24) extends from the base (8) of the hull (2) to the deck (10), which deck (10) is perpendicular to and is supported by said at least one bulkhead.

9. The vessel of claim 1, wherein the at least one bulkhead (24) is connected to the deck (10).

10. The vessel of any of the preceding claims, wherein the first and second storage tanks (20, 22) are membrane tanks which are substantially square in plan view.

11. The vessel of any of the preceding claims, wherein at least one transverse bulkhead (32) is arranged between subsequent storage tanks of the plurality of first storage tanks and the plurality of second storage tanks.

12. The vessel of claim 11, wherein the at least one transverse bulkhead (32) comprises a first transverse bulkhead (34) and a second transverse bulkhead (36) spaced apart from and parallel to the first transverse bulkhead.

13. The vessel of any of the preceding claims, comprising secondary longitudinal bulkheads extending along and parallel to the longitudinal sides (4, 6).

14. The vessel according to any of the preceding claims, further comprising at least one processing deck (50), which is elevated with respect to the deck (10), the processing deck having processing units (52) for the processing of a hydrocarbon stream located thereon.

15. A method for the liquefaction of a gaseous hydrocarbon stream to at least provide liquefied natural gas (LNG), using a vessel according to any of the preceding claims.

## Patentansprüche

1. Wasserfahrzeug zur Kohlenwasserstoffverarbeitung (100), wobei das Wasserfahrzeug Folgendes umfasst:
- einen länglichen Rumpf (2), der Längsseiten (4, 6), eine Basis (8), die sich zwischen den Seiten erstreckt, ein Deck (10), das oberhalb des Rumpfes angeordnet ist und sich zwischen den Seiten erstreckt, und eine mittlere Längsebene (12) zwischen den Längsseiten umfasst;
- eine Vielzahl von ersten Lagertanks (20), die auf der Steuerbordseite der mittleren Längsebene angeordnet ist;
- eine Vielzahl von zweiten Lagertanks (22), die auf der Backbordseite der mittleren Längsebene in symmetrischer Seite-an-Seite-Anordnung mit der Vielzahl von ersten Lagertanks angeordnet ist;
- mindestens ein Längsschott (24), das sich entlang der mittleren Ebene erstreckt und zwischen benachbarten ersten und zweiten Lagertanks angeordnet ist, wobei das mindestens eine Schott ein erstes Längsschott (26) und ein zweites Längsschott (28) umfasst, das von dem ersten Längsschott (26) beabstandet und parallel zu diesem ist,
**dadurch gekennzeichnet, dass** ein Behälter oder ein Kanal zum Enthalten von Ballastwasser innerhalb eines Raums zwischen dem ersten Schott und dem zweiten Schott in der Nähe der Basis des Wasserfahrzeugs angeordnet ist, wobei die maximale Breite des Wasserfahrzeugs 70 Meter oder mehr beträgt.

2. Wasserfahrzeug nach Anspruch 1, wobei Verrohrung für die Zirkulation von warmem Fluid zwischen dem ersten Längsschott (26) und dem zweiten Längsschott (28) angeordnet ist, um dem Kühleffekt der Fracht in der Vielzahl von ersten und zweiten Lagertanks entgegenzuwirken.

3. Wasserfahrzeug nach Anspruch 2, wobei das warme Fluid (Meer-)Wasser beinhaltet, das aus Verarbeitungseinheiten (52) abgelassen wurde.

4. Wasserfahrzeug nach Anspruch 2 oder 3, wobei die Verrohrung Rohre zum Ablassen des zirkulierten Fluids in die Umgebung beinhaltet.

5. Wasserfahrzeug nach Anspruch 2, 3 oder 4, wobei die Verrohrung Rohre zum Aufnahmen von Meerwasser aus der Umgebung zum Kühlen der Verarbeitungseinheiten (52) beinhaltet.

6. Wasserfahrzeug nach Anspruch 1, wobei das Ballastwasser Meerwasser ist.

7. Wasserfahrzeug nach Anspruch 1, wobei das erste Längsschott (26) und das zweite Längsschott (28) einen Durchgang (30) dazwischen definieren, der ausreicht, um Zugang für eine Inspektion zu ermöglichen.

8. Wasserfahrzeug nach Anspruch 1, wobei sich das mindestens eine Schott (24) von der Basis (8) des Rumpfes (2) zum Deck (10) erstreckt, wobei das Deck (10) senkrecht zu dem mindestens einen Schott ist und durch dieses getragen wird.

9. Wasserfahrzeug nach Anspruch 1, wobei das mindestens eine Schott (24) mit dem Deck (10) verbunden ist.

10. Wasserfahrzeug nach einem der vorhergehenden Ansprüche, wobei die ersten und zweiten Langertanks (20, 22) Membrantanks sind, die in der Draufsicht im Wesentlichen quadratisch sind.

11. Wasserfahrzeug nach einem der vorhergehenden Ansprüche, wobei mindestens ein Querschott (32) zwischen aufeinanderfolgenden Lagertanks der Vielzahl von ersten Lagertanks und der Vielzahl von zweiten Lagertanks angeordnet ist.

12. Wasserfahrzeug nach Anspruch 11, wobei das mindestens eine Querschott (32) ein erstes Querschott (34) und ein zweites Querschott (36) umfasst, das von dem ersten Querschott beabstandet und parallel zu diesem ist.

13. Wasserfahrzeug nach einem der vorhergehenden Ansprüche, umfassend sekundäre Längsschotten, die sich entlang der Längsseiten (4, 6) erstrecken und parallel zu diesen sind.

14. Wasserfahrzeug nach einem der vorhergehenden Ansprüche, ferner umfassend mindestens ein Verarbeitungsdeck (50), welches in Bezug auf das Deck (10) erhöht ist, wobei das Verarbeitungsdeck die Verarbeitungseinheiten (52) zum Verarbeiten eines darauf angeordneten Kohlenwasserstoffstroms aufweist.

15. Verfahren zur Verflüssigung eines gasförmigen Kohlenwasserstoffstroms, um mindestens Flüssigerdgas (LNG) bereitzustellen, unter Verwendung eines Wasserfahrzeugs nach einem der vorhergehenden Ansprüche.

## Revendications

1. Cuve de traitement d'hydrocarbures (100), la cuve comprenant :
- une coque allongée (2) comprenant des côtés longitudinaux (4, 6), une base (8) s'étendant entre les côtés, un plateau (10) étant situé en haut de la coque et entre les côtés, et un plan médian longitudinal (12) entre les côtés longitudinaux ;
- une pluralité de premiers réservoirs de stockage (20) disposés sur le côté tribord du plan médian longitudinal ;
- une pluralité de seconds réservoirs de stockage (22) disposés sur le côté bâbord du plan médian longitudinal dans un agencement côte à côte symétrique avec la pluralité de premiers réservoirs de stockage ; et
- au moins une cloison longitudinale (24) s'étendant le long du plan médian et située entre les premiers et les seconds réservoirs de stockage adjacents, dans laquelle l'au moins une cloison comprend une première cloison longitudinale (26) et une seconde cloison longitudinale (28) espacée de et parallèle à la première cloison longitudinale (26),
**caractérisée en ce qu'**un récipient ou un conduit servant à contenir de l'eau de ballastage est disposé dans un espace entre la première et la seconde cloison près de la base de la cuve, dans laquelle la largeur maximale de la cuve est de 70 mètres ou plus.

2. Cuve selon la revendication 1, dans laquelle une tuyauterie pour la circulation de fluide chaud est disposée entre la première cloison longitudinale (26) et la seconde cloison longitudinale (28) pour contrer l'effet de refroidissement de la cargaison dans la pluralité de premiers et seconds réservoirs de stockage.

3. Cuve selon la revendication 2, dans laquelle le fluide chaud comprend de l'eau (de mer) déchargée à partir des unités de traitement (52).

4. Cuve selon la revendication 2 ou 3, dans laquelle la tuyauterie comprend des tuyaux pour décharger le fluide circulant dans l'environnement.

5. Cuve selon la revendication 2, 3 ou 4, dans laquelle la tuyauterie comprend des tuyaux pour prendre de l'eau de mer de l'environnement afin de refroidir les unités de traitement (52).

6. Cuve selon la revendication 1, dans laquelle l'eau de ballastage est de l'eau de mer.

7. Cuve selon la revendication 1, dans laquelle la première cloison longitudinale (26) et la seconde cloison longitudinale (28) définissent un passage (30) entre elles qui est suffisant pour permettre l'accès pour une inspection.

8. Cuve selon la revendication 1, dans laquelle l'au moins une cloison (24) s'étend de la base (8) de la coque (2) au plateau (10), lequel plateau (10) est perpendiculaire à ladite et est soutenu par ladite au moins une cloison.

9. Cuve selon la revendication 1, dans laquelle l'au moins une cloison (24) est reliée au plateau (10).

10. Cuve selon l'une quelconque des revendications précédentes, dans laquelle les premiers et les seconds réservoirs de stockage (20, 22) sont des réservoirs à membrane qui sont sensiblement carrés dans une vue en plan.

11. Cuve selon l'une quelconque des revendications précédentes, dans laquelle l'au moins une cloison transversale (32) est disposée entre des réservoirs de stockage suivants de la pluralité de premiers réservoirs de stockage et la pluralité de seconds réservoirs de stockage.

12. Cuve selon la revendication 11, dans laquelle l'au moins une cloison transversale (32) comprend une première cloison transversale (34) et une seconde cloison transversale (36) espacée de et parallèle à la première cloison transversale.

13. Cuve selon l'une quelconque des revendications précédentes, comprenant des cloisons longitudinales secondaires s'étendant le long des et parallèles aux côtés longitudinaux (4, 6).

14. Cuve selon l'une quelconque des revendications précédentes, comprenant en outre au moins un plateau de traitement (50), qui est élevé par rapport au plateau (10), le plateau de traitement ayant des unités de traitement (52) pour le traitement d'un flux d'hydrocarbures situé sur celui-ci.

15. Procédé pour la liquéfaction d'un flux d'hydrocarbures gazeux pour au moins fournir un gaz naturel liquéfié (GNL), en utilisant une cuve selon l'une quelconque des revendications précédentes.
